# EUROPEAN PATENT SPECIFICATION

(11) **EP 0 580 061 B1**
(45) Date of publication and mention of the grant of the patent: **01.10.1997**
(21) Application number: 93111171.0
(22) Date of filing: 13.07.1993
(51) Int. Cl.: H04N 11/00

(54) **Method, coder and decoder for improving compatibility of HDMAC signals**
Verfahren, Coder und Decoder zur Verbesserung der Kompatibilität von HDMAC-Signalen
Méthode, codeur et décodeur pour améliorer la compatibilité des signaux HDMAC

(30) Priority: 22.07.1992 EP 92402120; 13.11.1992 EP 92403065
(43) Date of publication of application: 26.01.1994
(73) Proprietor: THOMSON multimedia, 92400 Courbevoie (FR)
(72) Inventor: Weisser, Martin, F-67100 Strasbourg (FR)
(74) Representative: Hartnack, Wolfgang, Dipl.-Ing.

(56) References cited:
- EP-A- 0 319 105
- EP-A- 0 433 199
- EP-A- 0 484 844
- WO-A-89/01269
- US-A- 4 612 568

## Description

The present invention relates to a method, to a coder and to a decoder for improving compatibility of HDMAC signals.

### Background

HDMAC TV signals can be transmitted in a compatible way over existing D2MAC channels (MAC: multiplexed analogue components). In HDMAC the pixels are subsampled in different order within each two- or four-field sequence. This subsampling in the current HDMAC encoding algorithm produces a 25Hz twitter along vertical coloured edges in standard MAC receivers.

### Invention

It is one object of the invention to disclose a method for improving the compatibility of HDMAC signals, in which such distortions are avoided. This object is reached by the method disclosed in claim 1.

It is a further object of the invention to disclose an coder which utilises the inventive method. This object is reached by the coder disclosed in claim 2.

It is a further object of the invention to disclose a decoder which utilises the inventive method. This object is reached by the decoder disclosed in claim 3.

The reason for the above described defect is, that in the chrominance components U and V the odd fields carry even field information and vice versa, but the HDMAC multiplexer applies the same processing as in the luminance path to the chrominance path. In even fields a shift of half a 20.25MHz clock period is carried out in the multiplexer to arrange even field luminance pixels in their proper horizontal spatial position. The same shift is applied to the even field chrominance pixels, which is in fact the opposite of what should be done.
Therefore, the arrangement of the luminance and chrominance samples prior to the current HDMAC multiplexer and subsequent to the HDMAC demultiplexer in the receiver, respectively, is modified. The horizontal position of the chrominance pixels within the compatible picture is matched to the position of the respective luminance samples.

In principle the inventive method consists in improving compatibility of HDMAC signals, wherein standard HDMAC bandwidth reduction means (BRE) which operate on a standard HDMAC input signal (011) feed to standard HDMAC multiplexer means (MUX) a luminance component (Y), a chrominance component (U/V) and a first sync signal (SYNC) and said multiplexer means output a compatible D2MAC signal for transmitting on a channel (010, 0110) to a D2MAC receiver or to an HDMAC receiver with standard HDMAC demultiplexer means (DEMUX) which feed to standard HDMAC bandwidth restoration means (BRD) a luminance component (Y), a chrominance component (U/V) and a second sync signal (SYNC), wherein said restoration means output a reconstructed HDMAC signal (012) and wherein:
- the luminance component from the output of said reduction means is delayed by first one-luminance-clock delay means (0121) before entering said multiplexer;
- in case of odd fields the chrominance components from the output of said reduction means are delayed by first one-chrominance-clock delay means (0122) before entering said multiplexer, controlled by first switching means (0123) which are controlled by said first sync signal;
- the luminance component and said second sync signal from the output of said demultiplexer means are delayed by second (0131) and third (0134), respectively, one-luminance-clock delay means before entering said restoration means;
- in case of even fields the chrominance components from the output of said demultiplexer means are delayed by second one-chrominance-clock delay means (0132) before entering said restoration means, controlled by second switching means (0133) which are controlled by said second sync signal.

In principle the inventive coder for improving compatibility of HDMAC signals comprises standard HDMAC bandwidth reduction means (BRE) which operate on a standard HDMAC input signal (011) and feed to standard HDMAC multiplexer means (MUX) a luminance component (Y), a chrominance component (U/V) and a sync signal (SYNC), wherein said multiplexer means output a compatible D2MAC signal for transmitting on a channel (010, 0110) to a respective receiver, and the luminance component is delayed by one-luminance-clock delay means (0121) before entering said multiplexer and in case of odd fields the chrominance components are delayed by one-chrominance-clock delay means (0122) before entering said multiplexer, controlled by switching means (0123) which are controlled by said sync signal.

In principle the inventive decoder for improving compatibility of HDMAC signals comprises standard HDMAC demultiplexer means (DEMUX) which operate on a compatible D2MAC input signal (010, 0110) and feed to standard HDMAC bandwidth restoration means (BRD) a luminance component (Y), a chrominance component (U/V) and a sync signal (SYNC), wherein said restoration means output a reconstructed HDMAC signal (012) and the luminance component and the sync signal are delayed by first (0131) and second (0134) one-luminance-clock delay means, respectively, before entering said restoration means and in case of even fields the chrominance components are delayed by one-chrominance-clock delay means (0132) before entering said restoration means, controlled by switching means (0133) which are controlled by said sync signal.

### Drawings

Preferred embodiments of the invention are described with reference to the accompanying drawings, which show in:
- Fig. 1: simplified block diagram of the known HDMAC coder and decoder and inventive modifications;
- Fig. 2-5, 8-11; 14-16, 19-21 and 24-26:: known pixel arrangement;
- Fig. 6, 7,12, 13, 17, 18, 22, 23, 27 and 28:: inventive pixel arrangement.

### Preferred embodiments

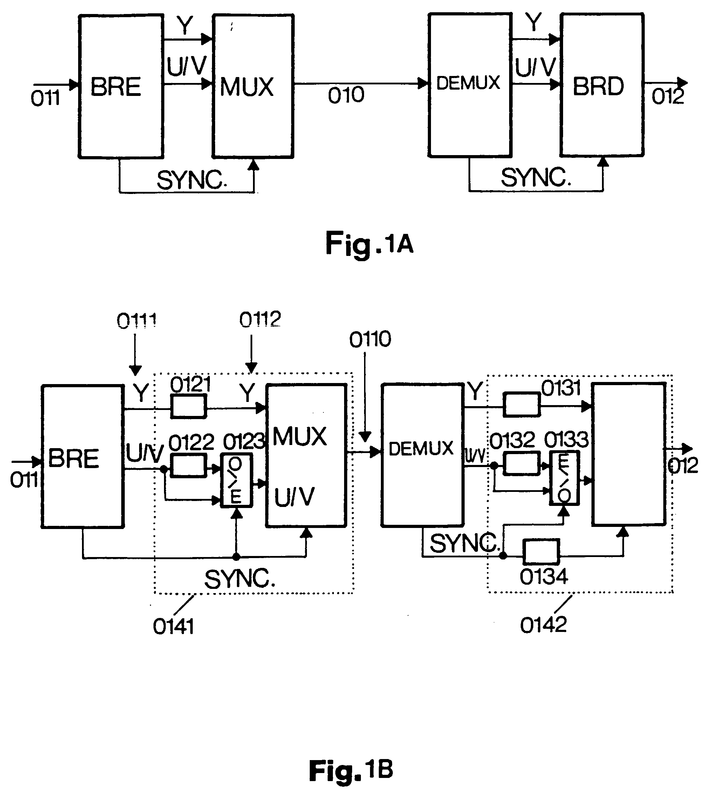

In Fig. 1A the input signal 011, e.g. a camera signal, is fed to a bandwidth reduction encoder BRE, which delivers via an 4:2:2 interface the luminance component Y, the chrominance components U and V and a sync signal SYNC to an HDMAC multiplexer MUX, the output signal of which is transmitted via channel 010 as compatible D2MAC signal to the HDMAC demultiplexer DEMUX in a receiver. This demultiplexer feeds the luminance component Y, the chrominance components U and V and a sync signal SYNC to a respective bandwidth restoration decoder BRD which outputs the reconstructed HDMAC signal 012.
Fig. 1B shows the inventive modifications to introduce in the HDMAC specification part 2, page 47, namely a modified HDMAC multiplexer 0141 and a modified bandwidth restoration decoder 0142. A one-luminance-clock delay (13.5MHz clock) 0121 is inserted between the Y output of encoder BRE and the Y input of multiplexer MUX. The U/V output of encoder BRE is fed to the second input of a switch 0123 and via a one-chrominance-clock delay (6.75MHz clock) 0122 to the first input of that switch. The switch is operated by signal SYNC and connects the U/V input of multiplexer MUX in odd fields to the output of delay 0122 and in even fields to the U/V output of encoder BRE. The compatibility of the D2MAC signal on channel 0110 is thereby improved.
A further one-luminance-clock delay (13.5MHz clock) 0131 is inserted between the Y output of demultiplexer DEMUX and the Y input of decoder BRD. The U/V output of demultiplexer DEMUX is fed to the second input of a further switch 0133 and via a one-chrominance-clock delay (6.75MHz clock) 0132 to the first input of that switch. This switch is operated by signal SYNC and connects the U/V input of decoder BRD in even fields to the output of delay 0132 and in odd fields to the U/V output of demultiplexer DEMUX. Signal SYNC is fed via a further one-chrominance-clock delay 0134 to the sync input of decoder BRD.
The hardware of Fig. 1B may also be implemented in another way. Mainly, the appropriate delay times and input signals (modified 4:2:2 interface) must correspond to the inventive sample arrangement.

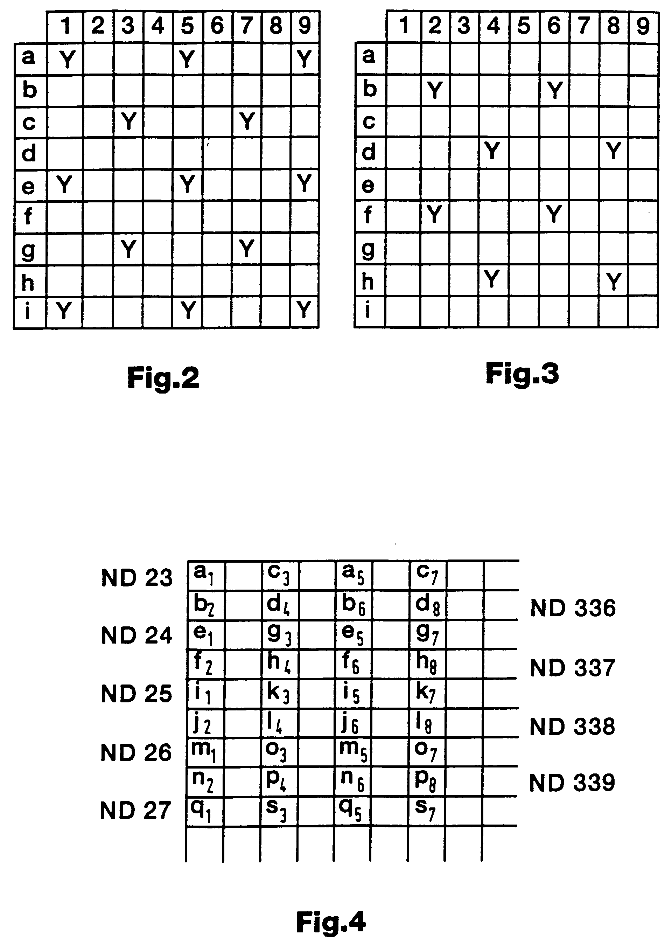

Fig. 2 to Fig. 28 show the positions of samples in the horizontal-vertical plain. Indices a, b, c, ... denote lines and indices 1, 2, 3, ... denote the sample position within the lines.

Fig. 2 shows the standard luminance subsampling structure used in encoder BRE in the 20ms branch for fields 1 and 3.

Fig. 3 shows the standard luminance subsampling structure used in encoder BRE in the 20ms branch for fields 2 and 4.

Fig. 4 shows the standard luminance pattern (4:2:2 format) at the input of multiplexer MUX in the 20ms branch, wherein lines ND23 to ND27 represent fields 1 and 3 and lines ND336 to ND339 represent fields 2 and 4.

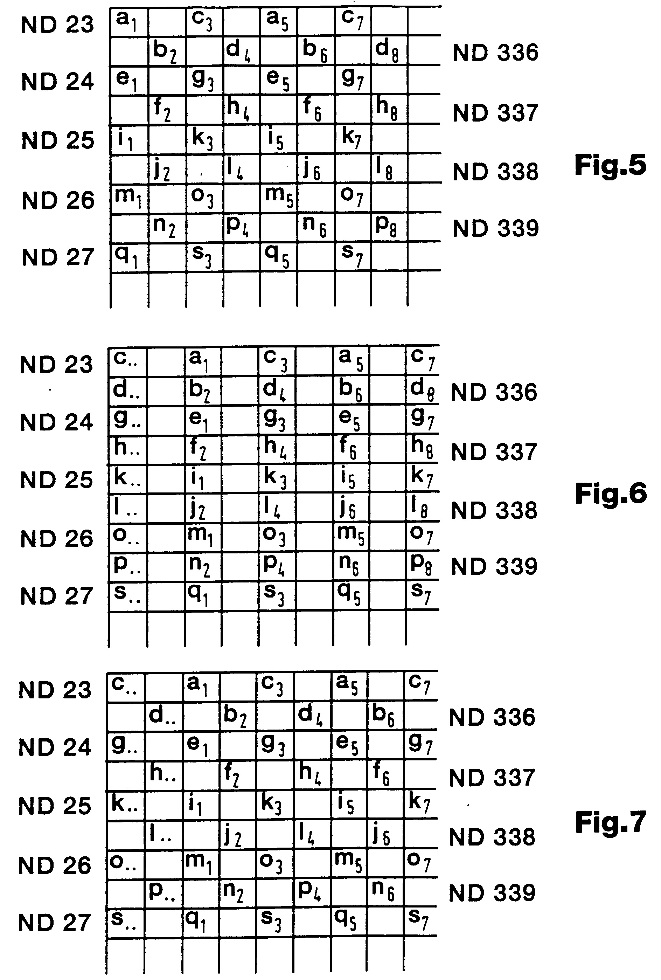

Fig. 5 shows the corresponding standard luminance pattern at the output of multiplexer MUX in the 20ms branch, wherein lines ND23 to ND27 represent fields 1 and 3 and lines ND336 to ND339 represent fields 2 and 4. The even fields are shifted by T/2, whereby T = 1/20.25MHz in the compressed and T = 1/13.5 MHz in the expanded video signal (see also HDMAC specification, part 2, page 42).

Fig. 6 shows the inventive luminance pattern (modified 4:2:2 format) at the input of multiplexer MUX in the 20ms branch, wherein lines ND23 to ND27 represent fields 1 and 3 and lines ND336 to ND339 represent fields 2 and 4. Compared to Fig. 4, the samples of all fields are delayed by one pixel position. Samples c.. to s.. are previous samples.

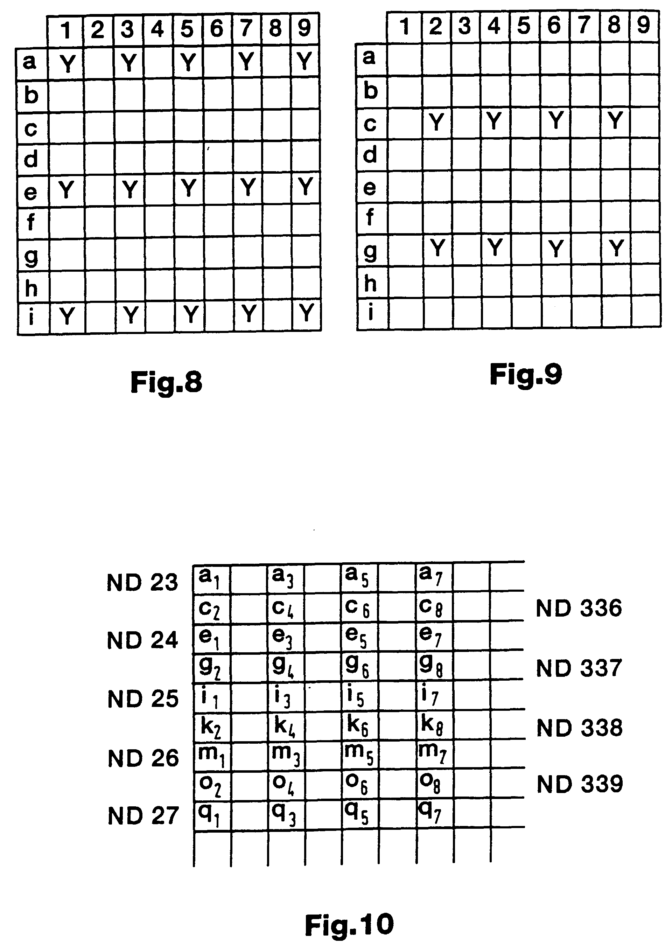

Fig. 7 shows the corresponding inventive luminance pattern at the output of multiplexer MUX in the 20ms branch, wherein lines ND23 to ND27 represent fields 1 and 3 and lines ND336 to ND339 represent fields 2 and 4. Compared to Fig. 5, the samples of all fields are delayed by one pixel position and the even fields are shifted by T/2, whereby T = 1/20.25MHz in the compressed and T = 1/13.5 MHz in the expanded video signal (see also HDMAC specification, part 2, page 42).

Fig. 8 shows the standard luminance subsampling structure used in encoder BRE in the 40ms branch for fields 1 and 3.

Fig. 9 shows the standard luminance subsampling structure used in encoder BRE in the 40ms branch for fields 2 and 4.

Fig. 10 shows the standard luminance pattern (4:2:2 format) at the input of multiplexer MUX in the 40ms branch, wherein lines ND23 to ND27 represent fields 1 and 3 and lines ND336 to ND339 represent fields 2 and 4.

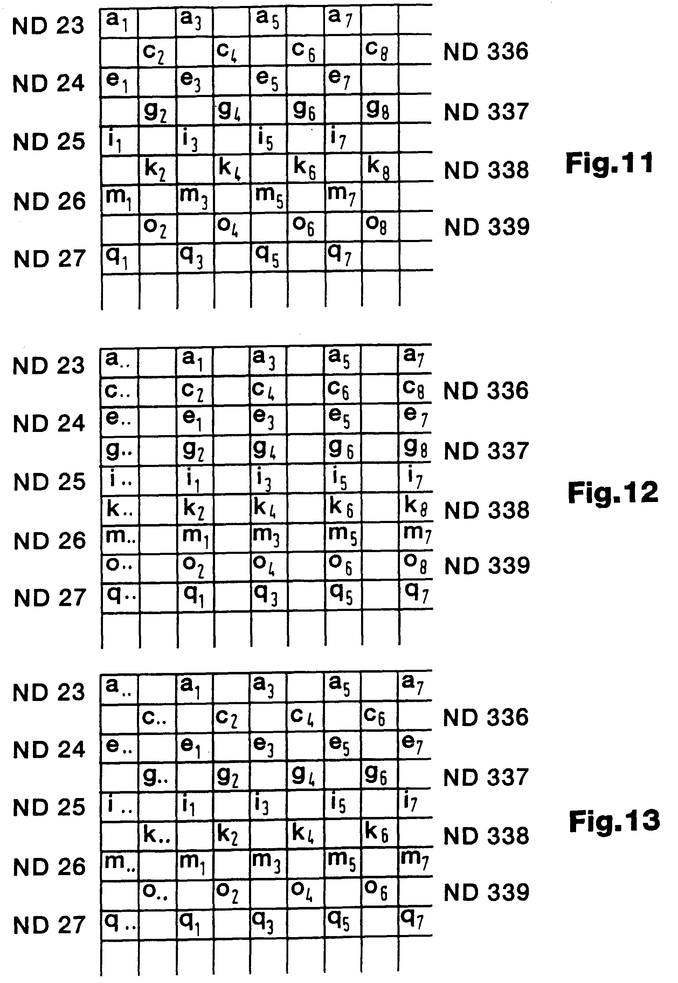

Fig. 11 shows the corresponding standard luminance pattern at the output of multiplexer MUX in the 40ms branch, wherein lines ND23 to ND27 represent fields 1 and 3 and lines ND336 to ND339 represent fields 2 and 4. The even fields are shifted by T/2, whereby T = 1/20.25MHz in the compressed and T = 1/13.5 MHz in the expanded video signal (see also HDMAC specification, part 2, page 42).

Fig. 12 shows the inventive luminance pattern (modified 4:2:2 format) at the input of multiplexer MUX in the 40ms branch, wherein lines ND23 to ND27 represent fields 1 and 3 and lines ND336 to ND339 represent fields 2 and 4. Compared to Fig. 10, the samples of all fields are delayed by one pixel position.

Fig. 13 shows the corresponding inventive luminance pattern at the output of multiplexer MUX in the 40ms branch, wherein lines ND23 to ND27 represent fields 1 and 3 and lines ND336 to ND339 represent fields 2 and 4. Compared to Fig. 11, the samples of all fields are delayed by one pixel position and the even fields are shifted by T/2, whereby T = 1/20.25MHz in the compressed and T = 1/13.5 MHz in the expanded video signal (see also HDMAC specification, part 2, page 42).

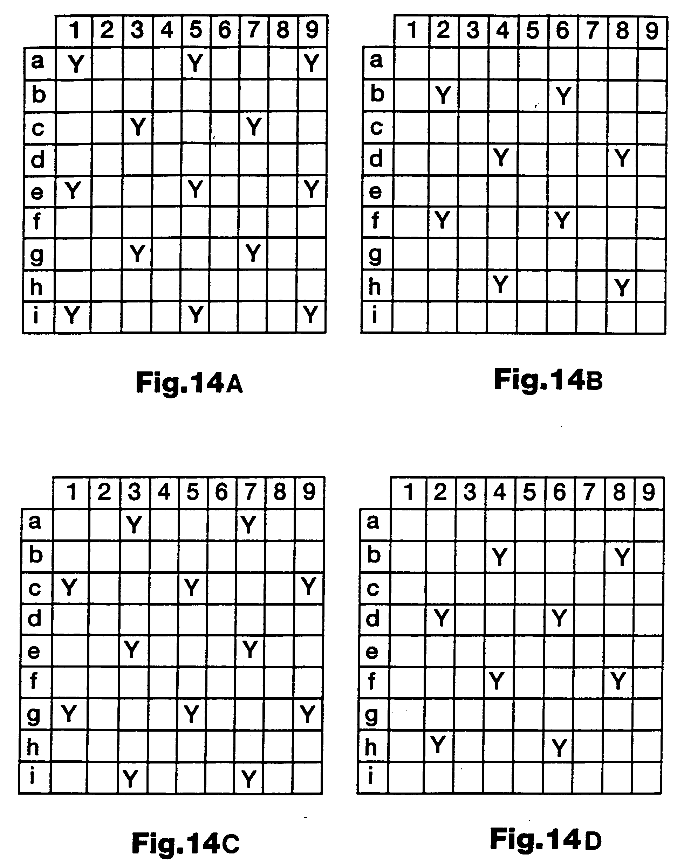

Fig. 14 shows the standard luminance subsampling structure used in encoder BRE in the 80ms branch, for field 1 in Fig. 14A, for field 2 in Fig 14B, for field 3 in Fig. 14C and for field 4 in Fig 14D.

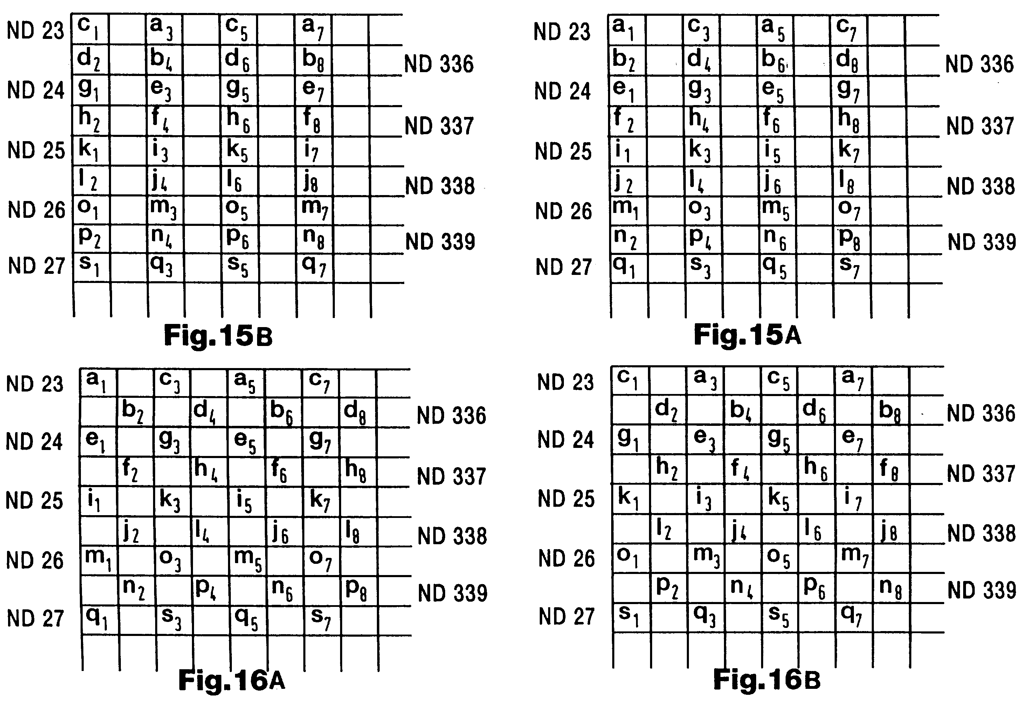

Fig. 15 shows the standard luminance pattern (4:2:2 format) at the input of multiplexer MUX in the 80ms branch, for fields 1 and 2 in Fig. 15A and for fields 3 and 4 in Fig 15B. Lines ND23 to ND27 represent fields 1 and 3 and lines ND336 to ND339 represent fields 2 and 4.

Fig. 16 shows the corresponding standard luminance pattern at the output of multiplexer MUX in the 80ms branch, for fields 1 and 2 in Fig. 16A and for fields 3 and 4 in Fig 16B, wherein lines ND23 to ND27 represent fields 1 and 3 and lines ND336 to ND339 represent fields 2 and 4. The even fields are shifted by T/2, whereby T = 1/20.25MHz in the compressed and T = 1/13.5 MHz in the expanded video signal (see also HDMAC specification, part 2, page 42).

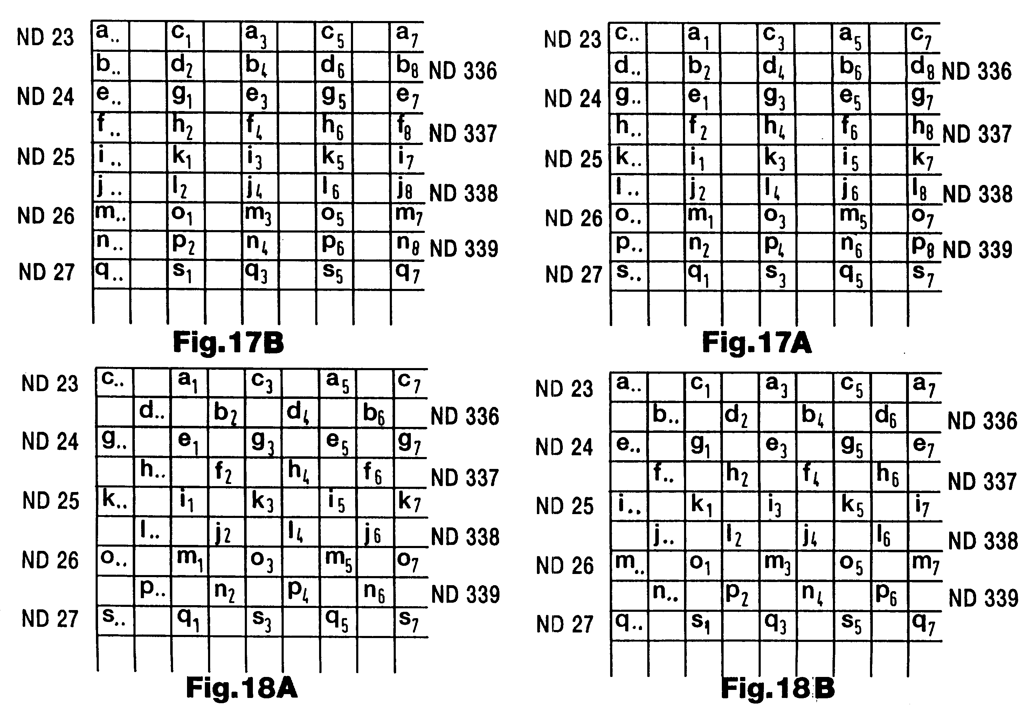

Fig. 17 shows the inventive luminance pattern (modified 4:2:2 format) at the input of multiplexer MUX in the 80ms branch, for fields 1 and 2 in Fig. 17A and for fields 3 and 4 in Fig 17B, wherein lines ND23 to ND27 represent fields 1 and 3 and lines ND336 to ND339 represent fields 2 and 4. Compared to Fig. 15, the samples of all fields are delayed by one pixel position.

Fig. 18 shows the corresponding inventive luminance pattern at the output of multiplexer MUX in the 80ms branch, for fields 1 and 2 in Fig. 18A and for fields 3 and 4 in Fig 18B, wherein lines ND23 to ND27 represent fields 1 and 3 and lines ND336 to ND339 represent fields 2 and 4. Compared to Fig. 16, the samples of all fields are delayed by one pixel position and the even fields are shifted by T/2, whereby T = 1/20.25MHz in the compressed and T = 1/13.5 MHz in the expanded video signal (see also HDMAC specification, part 2, page 42).

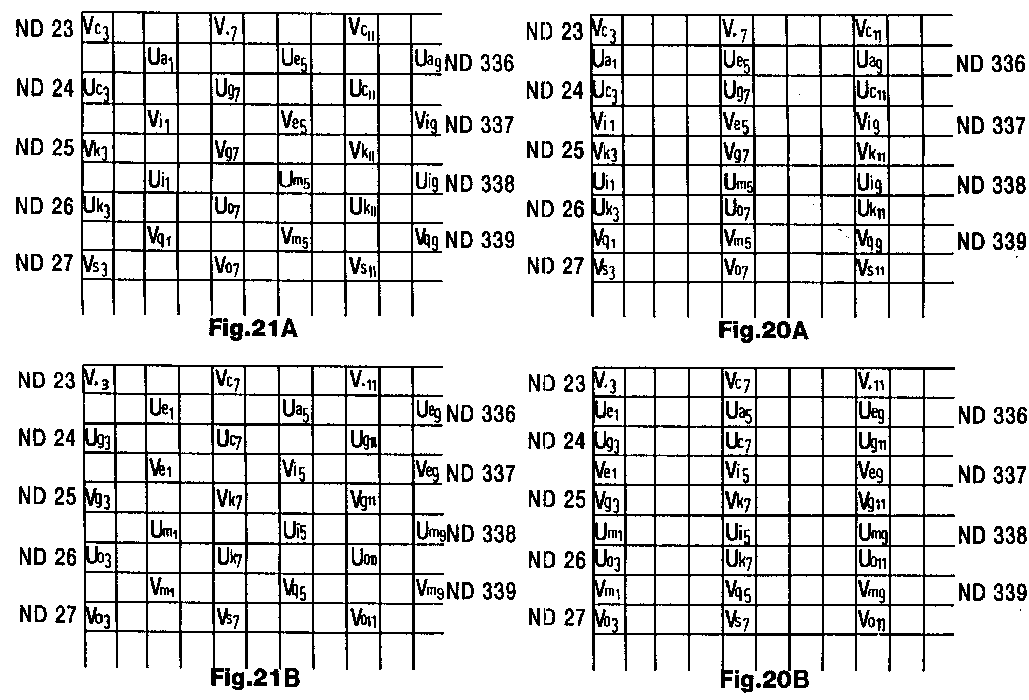

For luminance the samples are at their correct position and the shift on the even fields, which is introduced by multiplexer MUX, places the even field samples to their proper position, i.e. samples b₂ to p₂ are located between columns 1 and 3. But this is not the case for the chrominance samples. In the 20 and 80ms mode (Fig. 21) the odd and even fields are not located correctly. Samples having the index '3' are in column '1' in odd fields and samples having the index '1' are in column '3' in even fields. In the 40ms mode only even fields are not located well.
According to the invention specific samples are shifted.

### Luminance:

Odd and even fields are shifted horizontally by one 13.5MHz period. At the multiplexer's output the compatible picture begins at column 3. The last column is lost. However, column 1 will be filled with new pixels out of the 720 active source pixels/line in the 4:2:2 standard. Hence, the D2MAC transmission on channel 0110 still consists of 697 active pixels/line.

### Chrominance:

Odd fields only are shifted horizontally by one 6.75MHz period. Hence, the samples in the compatible picture are, compared to the luminance samples, located correctly for the 20 and 80ms mode. Due to the specific sampling structure in the 40ms mode, the even fields only are located correctly. Therefore, in the 40ms mode the compatible picture will have the current quality.

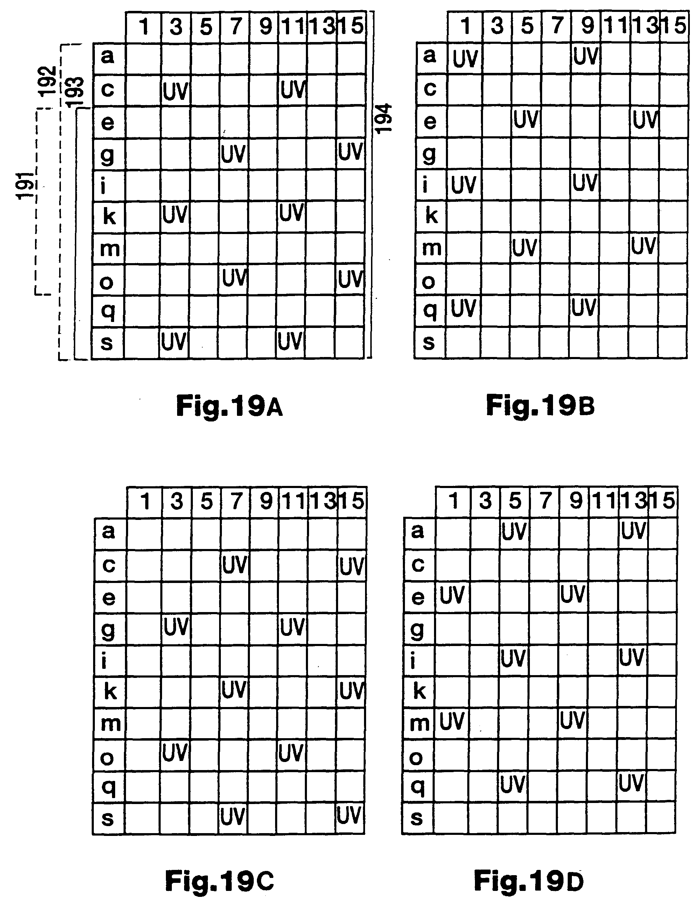

Fig. 19 shows the standard chrominance subsampling structure used in encoder BRE in the 20 and 80ms branch, for field 1 in Fig. 19A, for field 2 in Fig 19B, for field 3 in Fig. 19C and for field 4 in Fig 19D. In Fig. 19A, also the V block borders 193, the U block borders 194, the first V block row 192 and the last V block row 191 are depicted.

Fig. 20 shows the standard chrominance pattern (4:2:2 format) at the input of multiplexer MUX in the 20 and 80ms branch, for fields 1 and 2 in Fig. 20A and for fields 3 and 4 in Fig 20B. Lines ND23 to ND27 represent fields 1 and 3 and lines ND336 to ND339 represent fields 2 and 4.

Fig. 21 shows the corresponding standard chrominance pattern at the output of multiplexer MUX in the 20 and 80ms branch, for fields 1 and 2 in Fig. 21A and for fields 3 and 4 in Fig 21B, wherein lines ND23 to ND27 represent fields 1 and 3 and lines ND336 to ND339 represent fields 2 and 4. The even fields are shifted by T/2, whereby T = 1/20.25MHz in the compressed and T = 1/6.75 MHz in the expanded video signal (see also HDMAC specification, part 2, page 42).

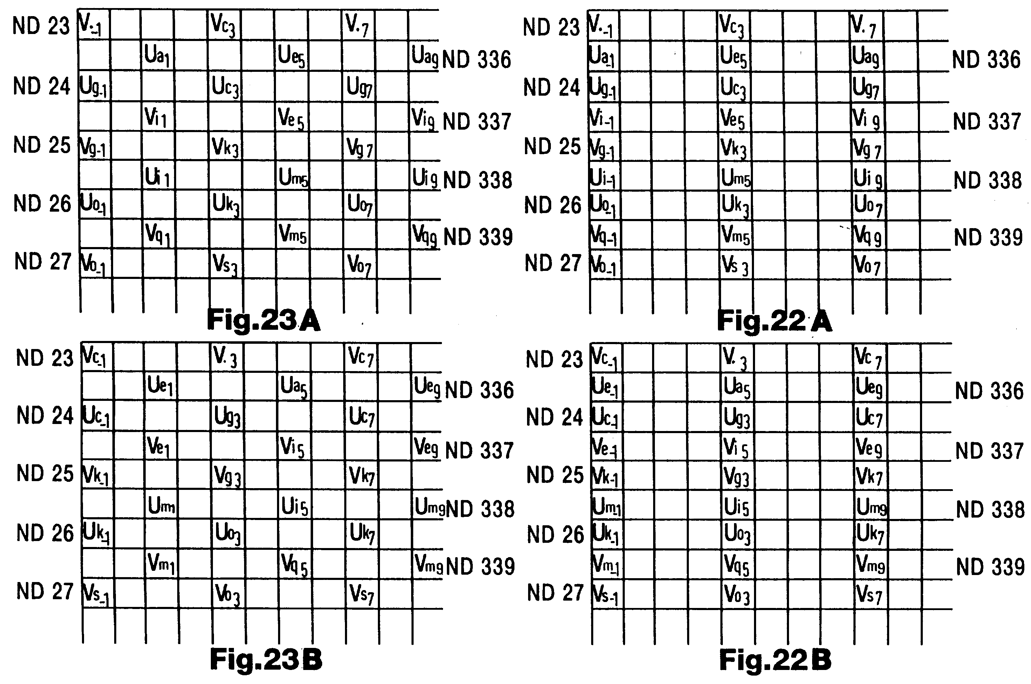

Fig. 22 shows the inventive chrominance pattern (modified 4:2:2 format) at the input of multiplexer MUX in the 20 and 80ms branch, for fields 1 and 2 in Fig. 22A and for fields 3 and 4 in Fig 22B, wherein lines ND23 to ND27 represent fields 1 and 3 and lines ND336 to ND339 represent fields 2 and 4. Compared to Fig. 20, the samples of the odd fields are delayed by one pixel position.

Fig. 23 shows the corresponding inventive chrominance pattern at the output of multiplexer MUX in the 20 and 80ms branch, for fields 1 and 2 in Fig. 23A and for fields 3 and 4 in Fig 23B, wherein lines ND23 to ND27 represent fields 1 and 3 and lines ND336 to ND339 represent fields 2 and 4. Compared to Fig. 21, the samples of the odd fields are delayed by one pixel position and the even fields are shifted by T/2, whereby T = 1/20.25MHz in the compressed and T = 1/6.75 MHz in the expanded video signal (see also HDMAC specification, part 2, page 42).

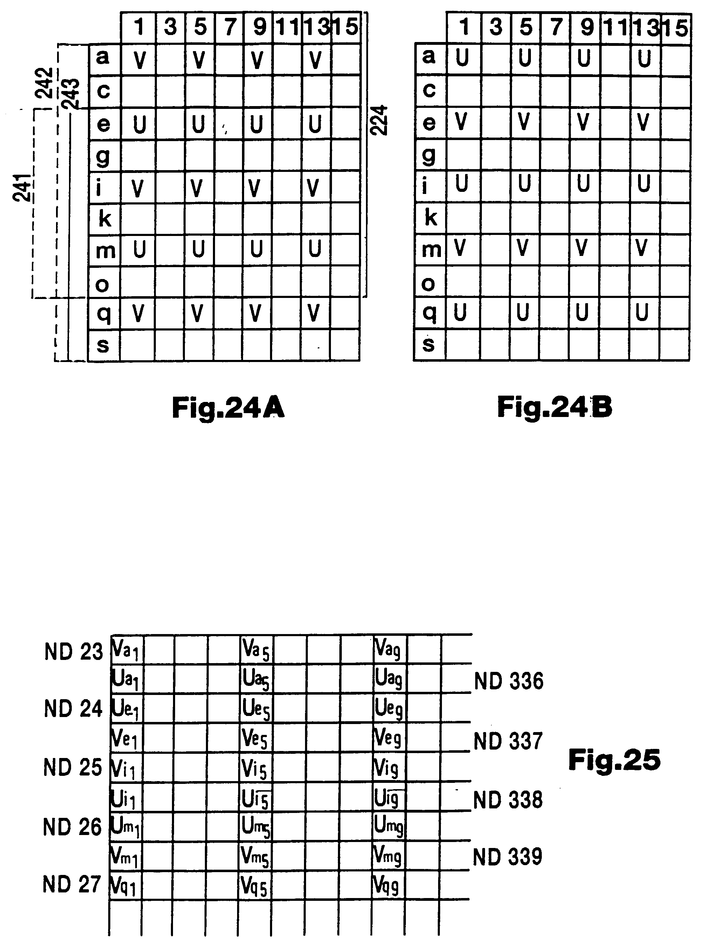

Fig. 24 shows the standard chrominance subsampling structure used in encoder BRE in the 40ms branch, for fields 1 and 3 in Fig. 24A and for fields 2 and 4 in Fig. 24B. In Fig. 24A, also the V block borders 243, the U block borders 244, the first V block row 242 and the last V block row 241 are depicted.

Fig. 25 shows the standard chrominance pattern (4:2:2 format) at the input of multiplexer MUX in the 40ms branch, wherein lines ND23 to ND27 represent fields 1 and 3 and lines ND336 to ND339 represent fields 2 and 4.

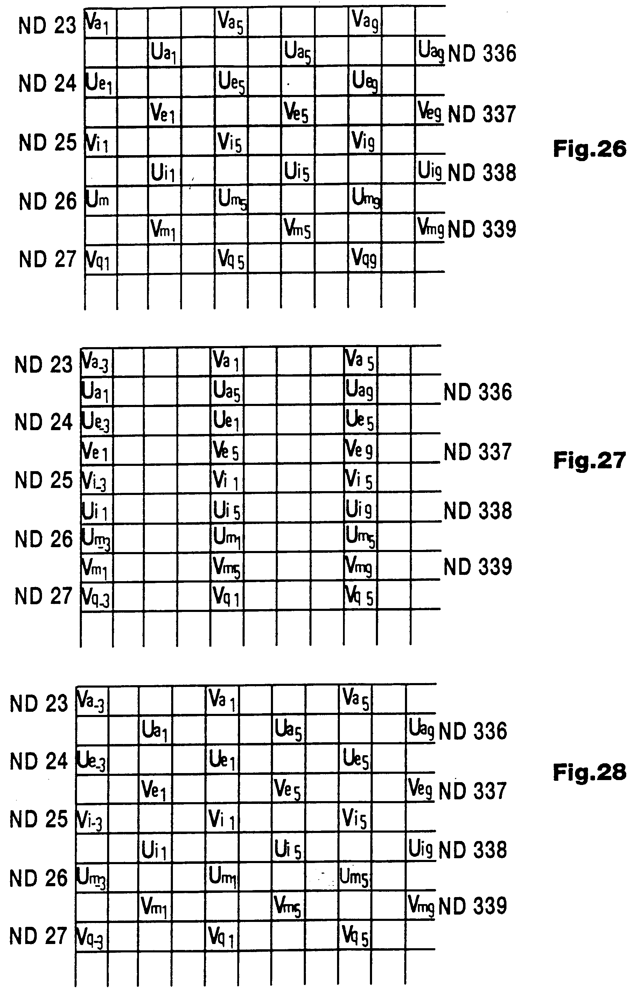

Fig. 26 shows the corresponding standard chrominance pattern at the output of multiplexer MUX in the 40ms branch, wherein lines ND23 to ND27 represent fields 1 and 3 and lines ND336 to ND339 represent fields 2 and 4. The even fields are shifted by T/2, whereby T = 1/20.25MHz in the compressed and T = 1/6.75 MHz in the expanded video signal (see also HDMAC specification, part 2, page 42).

Fig. 27 shows the modified chrominance pattern (modified 4:2:2 format) at the input of multiplexer MUX in the 40ms branch, wherein lines ND23 to ND27 represent fields 1 and 3 and lines ND336 to ND339 represent fields 2 and 4. Compared to Fig. 25, the samples of the odd fields are delayed by one pixel position.

Fig. 28 shows the corresponding modified chrominance pattern at the output of multiplexer MUX in the 20ms branch, wherein lines ND23 to ND27 represent fields 1 and 3 and lines ND336 to ND339 represent fields 2 and 4. Compared to Fig. 26, the samples of the odd fields are delayed by one pixel position and the even fields are shifted by T/2, whereby T = 1/20.25MHz in the compressed and T = 1/6.75 MHz in the expanded video signal (see also HDMAC specification, part 2, page 42).

If Fig. 4 and Fig. 5 are compared with Fig. 20 and Fig. 21, the horizontal shift in respective chrominance pixels toggles from field to field and creates a 25Hz twitter along vertical coloured edges. A respective comparison of Fig. 6 and 7 to Fig. 22 and Fig. 23 demonstrates that there is no such defect.

The invention can also be applied to other video signal transmission and/or recording systems which use a similar sampling structure.

## Claims

1. Method for improving compatibility of HDMAC signals, wherein standard HDMAC bandwidth reduction means (BRE) which operate on a standard HDMAC input signal (011) feed to standard HDMAC multiplexer means (MUX) a luminance component (Y), a chrominance component (U/V) and a first sync signal (SYNC) and said multiplexer means output a compatible D2MAC signal for transmitting on a channel (010, 0110) to a D2MAC receiver or to an HDMAC receiver with standard HDMAC demultiplexer means (DEMUX) which feed to standard HDMAC bandwidth restoration means (BRD) a luminance component (Y), a chrominance component (U/V) and a second sync signal (SYNC), wherein said restoration means output a reconstructed HDMAC signal (012), **characterised in:**
- the luminance component from the output of said reduction means is delayed by first one-luminance-clock delay means (0121) before entering said multiplexer;
- in case of odd fields the chrominance components from the output of said reduction means are delayed by first one-chrominance-clock delay means (0122) before entering said multiplexer, controlled by first switching means (0123) which are controlled by said first sync signal;
- the luminance component and said second sync signal from the output of said demultiplexer means are delayed by second (0131) and third (0134), respectively, one-luminance-clock delay means before entering said restoration means;
- in case of even fields the chrominance components from the output of said demultiplexer means are delayed by second one-chrominance-clock delay means (0132) before entering said restoration means, controlled by second switching means (0133) which are controlled by said second sync signal.

2. Encoder for improving compatibility of HDMAC signals according to the method of claim 1, comprising standard HDMAC bandwidth reduction means (BRE) which operate on a standard HDMAC input signal (011) and feed to standard HDMAC multiplexer means (MUX) a luminance component (Y), a chrominance component (U/V) and a sync signal (SYNC), wherein said multiplexer means output a compatible D2MAC signal for transmitting on a channel (010, 0110) to a respective receiver, **characterised in** that the luminance component is delayed by one-luminance-clock delay means (0121) before entering said multiplexer and that in case of odd fields the chrominance components are delayed by one-chrominance-clock delay means (0122) before entering said multiplexer, controlled by switching means (0123) which are controlled by said sync signal.

3. Decoder for improving compatibility of HDMAC signals according to the method of claim 1, comprising standard HDMAC demultiplexer means (DEMUX) which operate on a compatible D2MAC input signal (010, 0110) and feed to standard HDMAC bandwidth restoration means (BRD) a luminance component (Y), a chrominance component (U/V) and a sync signal (SYNC), wherein said restoration means output a reconstructed HDMAC signal (012), **characterised in** that the luminance component and the sync signal are delayed by first (0131) and second (0134) one-luminance-clock delay means, respectively, before entering said restoration means and that in case of even fields the chrominance components are delayed by one-chrominance-clock delay means (0132) before entering said restoration means, controlled by switching means (0133) which are controlled by said sync signal.

## Revendications

1. Méthode pour améliorer la compatibilité des signaux HDMAC, dans laquelle des moyens de réduction de largeur de bande (BRE) HDMAC standard qui agissent sur un signal d'entrée HDMAC standard (011) passent à des moyens de multiplexage (MUX) HDMAC standard une composante de luminance (Y), une composante de chrominance (U/V) et un premier signal de synchronisation (SYNC) et lesdits moyens de multiplexage produisent un signal D2MAC compatible à émettre sur un canal (010, 0110) vers un récepteur D2MAC ou vers un récepteur HDMAC présentant des moyens de démultiplexage (DEMUX) HDMAC standard qui passent à des moyens de restitution de largeur de bande (BRD) HDMAC standard une composante de luminance (Y), une composante de chrominance (U/V) et un deuxième signal de synchronisation (SYNC), dans laquelle lesdits moyens de restitution produisent un signal HDMAC reconstruit (012),
caractérisée en ce que:
- la composante de luminance provenant de la sortie desdits moyens de réduction est retardée par des premiers moyens de retard d'horloge d'une luminance (0121) avant d'entrer dans ledit multiplexeur;
- en cas de champs impairs les composantes de chrominance provenant de la sortie desdits moyens de réduction sont retardées par des premiers moyens de retard d'horloge d'une chrominance (0122) avant d'entrer dans ledit multiplexeur, commandées par des premiers moyens de commutation (0123) qui sont commandés par ledit premier signal de synchronisation;
- la composante de luminance et ledit deuxième signal de synchronisation provenant de la sortie desdits moyens de démultiplexage sont retardés par, respectivement, des deuxième (0131) et troisième (0134) moyens de retard d'horloge d'une luminance avant d'entrer dans lesdits moyens de restitution;
- en cas de champs pairs les composantes de chrominance provenant de la sortie desdits moyens de démultiplexage sont retardées par des deuxièmes moyens de retard d'horloge d'une chrominance (0132) avant d'entrer dans lesdits moyens de restitution, commandées par des deuxièmes moyens de commutation (0133) qui sont commandés par ledit deuxième signal de synchronisation;

2. Codeur pour améliorer la compatibilité des signaux HDMAC conformément à la méthode de la revendication 1, comprenant des moyens de réduction de largeur de bande (BRE) HDMAC standard qui agissent sur un signal d'entrée HDMAC standard (011) et passent à des moyens de multiplexage (MUX) HDMAC standard une composante de luminance (Y), une composante de chrominance (U/V) et un signal de synchronisation (SYNC), dans lequel lesdits moyens de multiplexage produisent un signal D2MAC compatible à émettre sur un canal (010, 0110) vers un récepteur respectif, caractérisé en ce que la composante de luminance est retardée par des moyens de retard d'horloge d'une luminance (0121) avant d'entrer dans ledit multiplexeur et en ce qu'en cas de champs impairs les composantes de chrominance sont retardées par des moyens de retard d'horloge d'une chrominance (0122) avant d'entrer dans ledit multiplexeur, commandées par des moyens de commutation (0123) qui sont commandés par ledit signal de synchronisation.

3. Décodeur pour améliorer la compatibilité des signaux HDMAC conformément à la méthode de la revendication 1, comprenant des moyens de démultiplexage (DEMUX) HDMAC standard qui agissent sur un signal d'entrée D2MAC compatible (010, 0110) et passent à des moyens de restitution de largeur de bande (BRD) HDMAC standard une composante de luminance (Y), une composante de chrominance (U/V) et un signal de synchronisation (SYNC), dans lequel lesdits moyens de restitution produisent un signal HDMAC reconstruit (012), caractérisé en ce que la composante de luminance et le signal de synchronisation sont retardés par, respectivement, des premiers (0131) et deuxième (0134) moyens de retard d'horloge d'une luminance avant d'entrer dans lesdits moyens de restitution et en ce qu'en cas de champs pairs les composantes de chrominance sont retardées par des moyens de retard d'horloge d'une chrominance (0132) avant d'entrer dans lesdits moyens de restitution, commandées par des moyens de commutation (0133) qui sont commandés par ledit signal de synchronisation.

## Patentansprüche

1. Verfahren zur Verbesserung der Kompatibilität von HDMAC-Signalen, bei dem Norm-HDMAC-Bandbreiten-Verminderungsmittel (BRE), die auf ein Norm-HDMAC-Eingangssignal (011) einwirken, Norm-HDMAC-Multiplexermitteln (MUX) eine Luminanz-Komponente (Y), eine Chrominanz-Komponente (U/V) und ein erstes Synchronsignal (SYNC) zuführen, und die Multiplexermittel am Ausgang ein kompatibles D2MAC-Signal zur Übertragung in einem Kanal (010, 0110) zu einem D2MAC-Empfänger oder zu einem HDMAC-Enpfänger mit Norm-HDMAC-Demultiplexermitteln (DEMUX) erzeugen, die Norm-HDMAC-Bandbreiten-Wiedergewinnungsmitteln (BRD) eine Luminanz-Komponente (Y), eine Chrominanz-Komponente (U/V) und ein zweites Synchronsignal (SYNC) zuführen, wobei die Wiedergewinnungsmittel am Ausgang ein rekonstruiertes HDMAC-Signal (012) erzeugen; dadurch gekennzeichnet:
daß die Luminanz-Komponente von dem Ausgang der Verminderungsmittel durch erste Einen-Luminanztakt-Verzögerungsmittel (0121) vor Zuführung zu dem Multiplexer verzögert werden;
daß im Fall von ungeraden Halbbildern die Chrominanz-Komponenten von dem Ausgang der Verminderungsmittel durch erste Einen-Chrominanztakt-Verzögerungsmittel (0122) vor Zuführung zu dem Multiplexer, gesteuert durch die ersten Schaltmittel (0123), die von dem ersten Synchronsignal gesteuert werden, verzögert werden;
daß die Luminanz-Komponente und das zweite Synchronsignal von dem Ausgang der Demultiplexermittel durch zweite (0131) bzw. dritte (0134) Einen-Luminanztakt-Verzögerungsmittel vor Zuführung zu den Wiedergewinnungsmitteln verzögert werden;
daß im Fall von geraden Halbbildern die Chrominanz-Komponenten von dem Ausgang der Demultiplexermittel durch zweite Einen-Chrominanztakt-Verzögerungsmittel (0132) vor Zuführung zu den Wiedergewinnungsmitteln, gesteuert durch zweite Schaltmittel (0133), die durch das zweite Synchronsignal gesteuert werden, verzögert werden.

2. Kodierer zur Verbesserung der Kompatibilität von HDMAC-Signalen nach dem Verfahren von Anspruch 1, umfassend Norm-HDMAC-Bandbreiten-Verminderungsmittel (BRE), die auf ein Norm-HDMAC-Eingangssignal (011) einwirken und Norm-HDMAC-Multiplexermitteln (MUX) eine Luminanz-Komponente (Y), eine Chrominanz-Komponente (U/V) und ein Synchronsignal (SYNC) zuführen, wobei die Multiplexermittel am Ausgang ein kompatibles D2MAC-Signal zur Übertragung in einem Kanal (010, 0110) zu einem entsprechenden Empfänger erzeugen, dadurch gekennzeichnet:
daß die Luminanz-Komponente durch Einen-Luminanztakt-Verzögerungsmittel (0121) vor Zuführung zu dem Multiplexer verzögert wird;
und daß im Fall von ungeraden Halbbildern die Chrominanz-Komponenten durch Einen-Chrominanztakt-Verzögerungsmittel vor der Zuführung zu dem Multiplexer, gesteuert durch die Schaltmittel (0123), die durch das Synchronsignal gesteuert werden, verzögert werden.

3. Dekoder zur Verbesserung der Kompatibilität von HDMAC-Signalen nach dem Verfahren von Anspruch 1, umfassend Norm-HDMAC-Demultiplexermittel (DEMUX), die auf ein kompatibles D2MAC-Eingangssignal (010, 0110) einwirken und Norm-HDMAC-Bandbreiten-Wiedergewinnungsmitteln (BRD) eine Luminanz-Komponente (Y), eine Chrominanz-Komponente (U/V) und ein Synchronsignal (SYNC) zuführen, wobei die Wiedergewinnungsmittel am Ausgang ein rekonstruiertes HDMAC-Signal (012) erzeugen, dadurch gekennzeichnet, daß die Luminanz-Komponente und das Synchronsignal durch erste (0131) bzw. zweite (0124) Einen-Luminanztakt-Verzögerungsmittel vor der Zuführung zu den Wiedergewinnungsmittel verzögert wer-den, und daß im Fall von geradzahligen Halbbildern die Chromi-nanz-Komponenten durch Einen-Chrominanztakt-Verzögerungsmittel (0132) vor Zuführung zu den Wiedergewinnungsmitteln, gesteuert durch die Schaltmittel (0133), die durch das Synchronsignal gesteuert werden, verzögert werden.
